# EUROPEAN PATENT APPLICATION

(11) **EP 2 273 056 A2**
(43) Date of publication of application: **12.01.2011**
(21) Application number: 10168408.2
(22) Date of filing: 05.07.2010
(51) Int. Cl.: E06B 9/02

(54) **Tank assembly for testing flood defence products**

(30) Priority: 09.07.2009 GB 0911922
(71) Applicant: Kelly, John, Droitwich, Worcestershire WR9 0NX (GB)
(72) Inventor: Kelly, Frank, Defford, Worcestershire WR8 9BA (GB)
(74) Representative: Jackson, Derek Charles

(57) **Abstract**

A tank assembly for testing flood defence products comprises a first tank (1) for holding water and a second tank (3) for testing flood defence products. The second tank is linked to the first tank by flow control means (5) and wall means (11) is provided within the second tank, the wall means defining one or more openings (13, 15) for receiving one or more flood defence products for testing.

## Description

### TANK ASSEMBLY FOR TESTING FLOOD DEFENCE PRODUCTS

This invention relates to a tank assembly for testing flood defence products.

Testing of flood defence products can be difficult because it is not well understood how effectively various flood defence products function and how they interrelate with other flood defence products that may be provided in a building. For example, although it is well known that properties are liable to flooding through door and window apertures, but flooding can also occur through a property's drains and/or through air bricks or other ventilation means provided in a wall of a property. In addition, the nature of the flood conditions can have a significant effect on the effectiveness of many flood defence products.

It is therefore an object of the present invention to provide a tank assembly which overcomes, or at least ameliorates, the above problems.

According to the present invention there is provided a tank assembly for testing flood defence products, the tank assembly comprising: a first tank for holding water; a second tank for testing flood defence products, the second tank being linked to the first tank by flow control means; and wall means provided within the second tank, the wall means defining one or more openings for receiving one or more flood defence products for testing.

The flow control means may include one or more valves forming an inlet into a lower region of the second tank. The valves may comprise gate valves.

The flow control means may include pump means for pumping water between the first and second tanks.

Control means may be provided for controlling operation of the flow control means, for example to transfer water from the first tank to the second tank under a number of predetermined conditions.

Wave generating means may be provided in the second tank.

A plurality of further walls may be provided on that side of the first-mentioned wall remote from an inlet from the first tank. The further walls may divide a portion of the second tank into at least one "wet" area and at least one "dry" area which have or do not have plumbing, respectively. Drainage may be provided in the or each "wet" area for simulating the effect of flood water on such drainage and for testing flood defence products such as sewage backflow prevention devices. The drainage may include one or more transparent pipes. The drainage may be provided beneath transparent flooring. Alternatively, flooring may be omitted to facilitate observation of water flow in the drainage. Pump means may be provided in one or more "wet" areas for returning water to the first tank.

For a better understanding of the present invention and to show more clearly how it may be carried into effect reference will now be made, by way of example, to the accompanying drawings which is a diagrammatic view of one embodiment of a tank assembly according to the present invention.

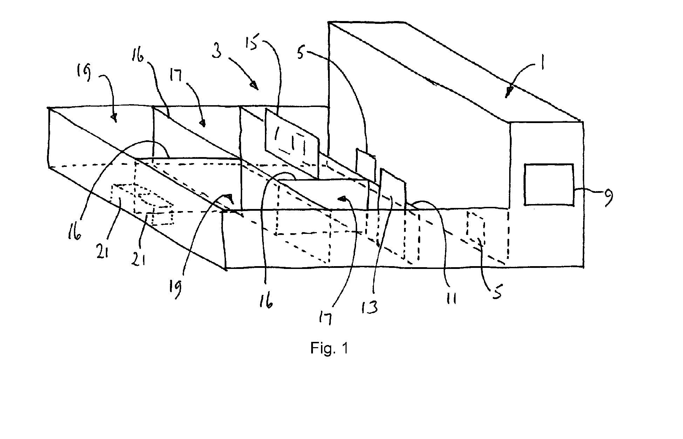

The tank assembly shown in the drawing comprises a first tank 1 linked to a second tank 3. The first tank 1 serves as a holding tank which contains a substantial volume of water, while the second tank 3 serves as a testing tank. As illustrated, the two tanks share a common wall, the wall incorporating a closable vale, for example two 25 cm gate valves 5, in a lower region of the common wall. Pump means (not shown) is provided in communication with each of the valves so as to be able to control, in combination with the valves themselves, the rate of flow of water through the valves from the first tank 1 to the second tank 3. The pump means may additionally serve to pump water back from the second tank to the first tank. In addition, means (not shown) capable of generating waves, extends across the second tank 3 and is shown diagrammatically.

The valves, pumps and wave generator can simulate a wide range of water conditions in the second tank 3, including standing water, flowing water such as might arise during a flash flood, and waves, that might occur during a flood incident.

Control means 9 is provided for controlling the water flow and conditions and may be programmed, for example, to transfer water from the first tank to the second tank under a number of predetermined conditions, although the control means may also generate user-determined conditions. The predetermined conditions may include determining the flow rate and/or volume of water into the second tank, with sensors (not shown) being provided to measure the required properties, such as volume and velocity of the water.

The second tank 3 has extending thereacross a wall 11 such as would form a lower part of a wall of a building. The wall 11 is provided with openings, such as a door opening 13 and one or more window openings 15. The wall 11 may therefore be used to test a number of flood defence products, such as barriers intended to provide protection against ingress of water through doors and/or windows and products intended to provide protection against ingress of water through air bricks or other openings that may be provided in a building.

On that side of the wall 11 remote from the first tank 1, the interior of the test building is divided by walls 16 into "dry" areas 17 and "wet" areas 19, that is into areas which would conventionally not incorporate any plumbing and areas which conventionally would incorporate plumbing, such as a cloakroom or bathroom, especially drainage into a public or private drainage system external of the building. Such drainage can be used to test and to demonstrate the effectiveness of, for example, sewage backflow prevention devices, especially if one of the "wet" areas is provided with such a device and the other of the "wet" areas is not. Pump means 21 may be provided in one or both of the "wet" areas to return water to the first tank 1 at the conclusion of a test or demonstration.

Flooring, at least in parts of the test building, may be transparent or may be omitted and plumbing may also be transparent to demonstrate the manner in which water gains access to the building through plumbing and beneath floor level during a flood.

It is, of course, not necessary to simulate precisely the features of any particular building. For example, it may be possible to test or demonstrate several similar products in a single "wet" area, such as several sewage backflow prevention devices.

Thus the tank assembly can be used to test or demonstrate a wide range of flood protection products, but additionally can be used to investigate and demonstrate how a building actually floods from different apertures, for example door apertures, airbricks and drains, and can test and demonstrate how different products protect different parts of the building.

Such a tank assembly can also be used for training personnel in the installation of flood defence products inasmuch as it can show such personnel the different results from correct and incorrect installation.

## Claims

1. A tank assembly for testing flood defence products, the tank assembly comprising: a first tank (1) for holding water; a second tank (3) for testing flood defence products, the second tank being linked to the first tank by flow control means (5); and wall means (11) provided within the second tank, the wall means defining one or more openings (13, 15) for receiving one or more flood defence products for testing.

2. A tank assembly as claimed in claim 1, wherein the flow control means includes one or more valves (5) forming an inlet into a lower region of the second tank (3).

3. A tank assembly as claimed in claim 2, wherein the valves (5) comprise gate valves.

4. A tank assembly as claimed in any preceding claim, wherein the flow control means includes pump means for pumping water between the first and second tanks (1, 3).

5. A tank assembly as claimed in any preceding claim, wherein control means (9) is provided for controlling operation of the flow control means (5).

6. A tank assembly as claimed in claim 5, wherein the control means (9) is adapted to control operation of the flow control means (5) to transfer water from the first tank (1) to the second tank (3) under a number of predetermined conditions.

7. A tank assembly as claimed in any preceding claim, wherein wave generating means is provided in the second tank (3).

8. A tank assembly as claimed in any preceding claim, wherein a plurality of further walls (16) are provided on that side of the first-mentioned wall (11) remote from an inlet from the first tank (1).

9. A tank assembly as claimed in claim 8, wherein the further walls (16) divide a portion of the second tank (3) into at least one "wet" area (19) and at least one "dry" area (17) which have or do not have plumbing, respectively.

10. A tank assembly as claimed in claim 9, wherein drainage is provided in the or each "wet" area (19) for simulating the effect of flood water on such drainage and for testing flood defence products such as sewage backflow prevention devices.

11. A tank assembly as claimed in claim 10, wherein the drainage includes one or more transparent pipes.

12. A tank assembly as claimed in claim 10 or 11, wherein the drainage is provided beneath transparent flooring.

13. A tank assembly as claimed in claim 10 or 11, wherein flooring is omitted to facilitate observation of water flow in the drainage.

14. A tank assembly as claimed in any one of claims 9 to 13, wherein pump means may be provided in one or more of the "wet" areas (19) for returning water to the first tank (1).
